# EUROPÄISCHE PATENTSCHRIFT

(11) **EP 1 431 385 B1**
(45) Veröffentlichungstag und Bekanntmachung des Hinweises auf die Patenterteilung: **22.03.2006**
(21) Anmeldenummer: 03028733.8
(22) Anmeldetag: 12.12.2003
(51) Int. Cl.: C12C 5/02, C12C 3/08, A23L 2/52, A23C 9/152

(54) **Xanthohumol-haltiges Getränk**
Xanthohumol containing beverage
Boisson contenant du xanthohumol

(30) Priorität: 18.12.2002 EP 02028409
(43) Veröffentlichungstag der Anmeldung: 23.06.2004
(73) Patentinhaber: Döhler GmbH, D-64295 Darmstadt (DE)
(72) Erfinder: Füsser, Hans, Dr., 63741 Aschaffenburg (DE); Tretzel, Joachim, Dr., 64342 Seeheim-Jugenheim (DE); Wydra, Markus, Dr., 63322 Rödermark (DE)
(74) Vertreter: Meyers, Hans-Wilhelm

(56) Entgegenhaltungen:
- EP-A- 0 679 393
- EP-A- 1 283 037
- WO-A-03/090555
- DE-A- 19 939 350
- GB-A- 1 071 867
- GB-A- 1 274 678
- US-A- 3 047 463

## Beschreibung

Gegenstand der Erfindung ist ein Xanthohumol-haltiges Getränk, enthaltend mindestens 2 ppm Xanthohumol und mindestens einen Lösungsvermittler.

Von hoher Bedeutung bei der Gesundheitsvorsorge ist der Schutz des Körpers vor sogenannten freien Radikalen. Es handelt sich dabei um aggressive Moleküle, die vom Körper selbst gebildet werden, wobei deren Menge bei Stress und hohen körperlichen Belastungen zunimmt. Physiologisch werden freie Radikale durch Antioxidantien unschädlich gemacht. Ein Antioxidans mit hoher Wirksamkeit ist Xanthohumol. Es handelt sich dabei um ein Polyphenol, das in geringen Mengen von < 0,1 ppm in Bier vorkommt.

Es wurde nachgewiesen, dass Xanthohumol zum Beispiel vor Osteoporose und Arteriosklerose schützt. Allgemein verringern die Polyphenole im Bier das Risiko für Erkrankungen der Herzkranzgefäße, Herzinfarkt und Schlaganfall. Zudem zeigten entsprechende *in vitro* und an Tiermodellen durchgeführte Versuche, dass Xanthohumol über antikanzerogene Eigenschaften zu verfügen scheint.

Allerdings weisen Xanthohumol-haltige Hopfenextrakte üblicherweise einen bitteren Geschmack auf. Hinzu kommt das Problem, dass Xanthohumol nur in geringen Mengen in wässerigen und vor allem in sauren wässerigen Systemen löslich ist. Bereits wenn die Konzentration von 0,1 ppm nur geringfügig erhöht wird, tritt eine Entmischung und eine Ausflockung des Xanthohumols auf. Darüber hinaus kommt es beim Prozess des Bierbrauens durch intramolekulare Umlagerungsreaktionen zu IsoXanthohumolbildung, durch die die oben beschriebene physiologische Wirksamkeit zumindest teilweise verloren geht. Daher ist eine Anreicherung im Bier, zum Beispiel durch Züchtung veränderter Hopfensorten, nur in begrenztem Ausmaß möglich.

Ein an der Technischen Universität München am Lehrstuhl für Technologie der Brauerei von Back und Mitarbeitern entwickeltes "Gesundheitsbier" das den Namen "XAN" erhalten hat, enthält vergleichsweise relativ hohe Xanthohumolanteile von etwa 0,4-0,45 ppm.

Gegenstand der DE 199 39 350 A1 sind Xanthohumol-haltige Hopfenextrakte. Durch Zugabe dieser Extrakte zu Getränken können die Erfinder jedoch nicht Getränke mit erhöhtem Xanthohumolgehalt herstellen. Um die Ausfällung von Xanthohumol zu verdecken, schlagen die Erfinder vor, trübe Getränke wie Hefeweißbier und naturtrübe Säfte zu verwenden.

Gegenstand der US-3,047,463 sind unter anderem Präparationen aus Hopfenextrakten und Trockenmilch, die in Getränken wie Tee oder Kaffee gelöst werden können. Die Hopfenextrakte sind wasserlöslich und enthalten daher kein oder nur sehr wenig Xanthohumol.

Die GB-1,071,867 offenbart die Herstellung von Hopfenextraktemulsionen auf der Basis von isomerisierten oder nicht-isomerisierten Hopfenextrakten. Beim Prozess der Isomerisierung wird das Xanthohumol größtenteils zu physiologisch inaktivem Isoxanthohumol umgewandelt. Präparationen auf der Basis von nicht-isomerisierten Extrakten müssen gemäss GB-1,071,867 während der Würzekochung zugesetzt werden, damit die Isomerisierung stattfindet. Die Herstellung von Getränken mit erhöhtem Xanthohumolgehalt ist somit nicht offenbart. Auch ein Getränkegrundstoff mit erhöhtem Xanthohumolgehalt ist nicht offenbart. Die beschriebene Emulsion auf der Basis von nichtisomerisiertem Hopfenextrakt ist lediglich ein Zusatzstoff beim Brauprozess, nicht jedoch ein Getränkegrundstoff, aus dem durch Beimischung von Wasser, Zucker oder Säure ein Getränk entsteht.

Die GB-1,274,678 betrifft die Herstellung von Fraktionen aus Hopfenextrakten, die möglichst wenig Xanthohumol und dem Xanthohumol verwandte Substanzen enthalten sollen. In der Offenlegungsschrift wird unzutreffender weise eine Harzfraktion als "Xanthohumole" bezeichnet.

Gegenstand der EP 0 679 393 A2 ist eine Vielzahl von pharmazeutischen Mischungen. In den Beispielen 10 und 11 werden pharmazeutische Mischungen beschrieben, die Xanthohumol enthalten. Getränke mit erhöhtem löslichen Gehalt an Xanthohumol oder Getränkegrundstoffe werden nicht beschrieben.

Der Erfindung liegt die Aufgabe zugrunde, Getränke bereitzustellen, die Xanthohumol in deutlich erhöhten Mengen enthalten, die dennoch wohlschmeckend sind und nicht den Hopfenextrakt-bedingten typisch bitteren Geschmack aufweisen.

Das der Erfindung zugrunde liegende Problem wird gelöst durch ein Xanthohumol-haltiges Getränk, das mindestens 2 ppm Xanthohumol und mindestens einen Emulgator enthält. Überraschenderweise wird durch diese Kombination ein Getränk erhalten, in dem Xanthohumol in sehr hohen Konzentrationen stabil gelöst ist, und in dem ein unangenehm bitterer Geschmack nicht auftritt.

Gegenstand der Erfindung sind Xanthohumol-haltige Getränke, Grundstoffe, Emulsionen, sowie Verfahren zur Herstellung und Verwendungen gemäss den Patentansprüchen 1 bis 16.

Der Emulgator ist vorzugsweise ausgewählt aus der Gruppe bestehend aus Polysorbaten, wie beispielsweise kommerziell erhältlichen Polyoxyethylen-Sorbitanfettsäurester (Tween)- und Span-Produkten, insbesondere Tween 20, 60, 80, Gummen wie beispielsweise *Gummi arabicum,* Pektinen, Stärken und modifizierten Stärken wie beispielsweise Purity Gum und/oder Proteinen wie beispielsweise Caseinaten aus Milch.

In einer bevorzugten Ausführungsform ist der Emulgator ein gereinigter Emulgator oder eine Mischung aus Emulgatoren, die im wesentlichen nicht weitere Substanzen enthält. Gemäß dieser bevorzugten Ausführungsform ist der Emulgator nicht Bestandteil einer Mischung von Stoffen, die Emulgatoren beinhaltet, wie zum Beispiel Milchpulver oder Trockenmilch.

Erfindungsgemäß wird das Xanthohumol-haltige Getränk vorzugsweise hergestellt, indem das Xanthohumol in Form einer stabilen Emulsion in das Fertiggetränk oder den entsprechenden Getränkegrundstoff eingebracht wird. Das fertige Getränk muss dabei keine Emulsion sein, obwohl solche erfindungsgemäßen Ausführungsformen auch möglich sind.

In einer bevorzugten Ausführungsform enthält die Emulsion eine Ölphase, die vorzugsweise aus einem Triglycerid besteht. Vorzugsweise werden Triglyceride mit nahezu vollständig gesättigten Fettsäureresten verwendet, die eine niedrige Iodzahl aufweisen. Die Triglyceride können auch als Bestandteil einer Mischung mit anderen Komponenten, vorzugsweise Di- und/oder Monoglyceriden, verwendet werden. In einer bevorzugten Ausführungsform ist die Emulsion eine Öl-in-Wasser-Emulsion.

Das schlecht wasser- und gut ethanollösliche Xanthohumol kann in solchen erfindungsgemäßen Zubereitungen in relativ hohen Mengen gelöst werden, wobei ein bitterer Geschmack im wesentlichen nicht feststellbar ist. In bevorzugten Ausführungsformen ist die Konzentration an Xanthohumol in den erfindungsgemäßen Getränken >2, >5 oder >10 ppm. Auch in diesen hohen Konzentrationen führt das Xanthohumol in den Getränken der Erfindung nicht zu einem bitteren oder unangenehmen Geschmack. Eine Erklärung könnte sein, dass für den Bittergeschmack des Hopfens weniger das Xanthohumol selbst, sondern vor allem die sogenannten Isosäuren verantwortlich sind. Das Xanthohumol trägt zum Bittergeschmack wahrscheinlich nur untergeordnet bei. Erfindungsgemäß können so Getränke bereitgestellt werden, die auf der einen Seite wohlschmeckend sind und andererseits vorbeugend gegen Krankheiten wie Herzinfarkt, Schlaganfall, Osteoporose und Arteriosklerose wirken.

In einer bevorzugten Ausführungsform enthält das Xanthohumol-haltige Getränk oder der Grundstoff mindestens einen Pflanzenextrakt und/oder Lösungsmittel. Vorzugsweise ist der Pflanzenextrakt ausgewählt aus der Gruppe bestehend aus Rosmarin, Salbei, Süßholz, Weißdorn, Vanille, Lindenblüte, Sonnenhutkraut, Ginseng, Gingko, Taigawurzel und Grüntee. Auch Kombinationen dieser Pflanzenextrakte können eingesetzt werden. Der Anteil am Gesamtgetränk liegt vorzugsweise zwischen 0,01 bis 1%, insbesondere zwischen 0,1 bis 1% (Gewicht/Volumen). Im Falle höher dosierter Xanthohumol-haltiger Getränke kann ein unter Umständen auftretender Bittergeschmack, ob hervorgerufen durch das Xanthohumol selbst oder durch anhaftende Isosäuren, durch einen Pflanzenextrakt oder durch eine Kombination von Pflanzenextrakte sensorisch zurückgedrängt werden.

In einer bevorzugten Ausführungsform wird das Xanthohumol in Form eines Emulsionssystems in das Getränk oder den Grundstoff eingebracht, bestehend aus einer Ölphase, einer Wasserphase und einem Emulgator. In der Ölphase kann das Xanthohumol in der Wärme, optional unter Zusatz einer geringen Menge Ethanol oder eines anderen polaren aprotischen Lösungsmittels, vorgelöst und anschließend diese Phase in die Wasserphase unter Verwendung eines Emulgators eingearbeitet werden. Beispielsweise ist das Xanthohumol in Triglyceriden in der Wärme in einem Massenverhältnis von etwa 1:10, insbesondere unter Zusatz einer geringen Menge Ethanols, gut lösbar.

Alternativ kann der Emulgator, insbesondere bei Verwendung von Tween (Polyoxyethylen-Sorbitanfettsäureestern) seine Wirkung auch als direkter Lösungsvermittler, d.h. ohne die Bildung einer Emulsion entfalten.

Gegenstand der Erfindung ist auch eine Kombination des erfindungsgemäßen Getränks mit anderen Getränken. In bevorzugten Ausführungsformen sind die anderen Getränke Bier, alkoholfreies oder alkoholreduziertes Bier, Softdrinks, Fruchtsaft oder Milch. Bei einer erfindungsgemäßen Kombination mit Bier ist der Volumenanteil an Bier vorzugsweise 20 bis 80%, insbesondere 40 bis 60%.

Gegenstand der Erfindung ist auch ein Xanthohumol-haltiger Grundstoff, enthaltend mindestens 10 ppm, vorzugsweise mindestens 20 ppm, und insbesondere mindestens 50 ppm oder 200 ppm Xanthohumol, und einen Emulgator für die Herstellung eines erfindungsgemäßen Xanthohumol-haltigen Getränks. Zusätzlich sind in bevorzugten Ausführungsformen ein Öl, ein Lösungsmittel und/oder ein Pflanzenextrakt enthalten. Unter Grundstoff sind Getränkegrundstoffe zu verstehen, die nur noch verdünnt und gegebenenfalls mit weiteren Inhaltsstoffen wie Zucker und/oder Säure versetzt werden müssen, um ein erfindungsgemäßes Getränk zu erhalten.

Die Erfindung betrifft auch ein Verfahren zur Herstellung eines Xanthohumol-haltigen Grundstoffs, wobei
- Xanthohumol und/oder ein Xanthohumol-haltiger Extrakt mit einem aufschmelzbaren Emulgator oder in einem in Lösungsmittel gelösten Emulgator gemischt wird,
- gegebenenfalls unter Erwärmen und Rühren eine isotrope Lösung erzeugt wird
- ggf. weitere Bestandteile wie ein Pflanzenextrakt zugesetzt werden.
das Lösungsmittel durch Destillation entfernt wird.

Der Xanthohumol-haltige Grundstoff weist in einer bevorzugten Ausführungsform einen Xanthohumol-Gehalt von weniger als 1000 ppm auf.

Ein Xanthohumol-haltiger Extrakt kann aus Hopfen mittels CO₂- oder Lösungsmittelextraktion anhand literaturbekannter Verfahren erhalten werden (Belitz, Grosch, *Lehrbuch der Lebensmittelchemie,* 4. Auflage (1992), Springer Verlag, *809 (Kapitel 20.1.2.3. Hopfen, Unterkapitel 20.1.2.3.3 Verarbeitung).* Vorzugsweise ist der Xanthohumol-haltige Extrakt wasserunlöslich. Alternativ ist die Verwendung von reinem oder angereichertem Xanthohumol als Ausgangsstoff möglich.

Gegenstand der Erfindung ist auch ein Verfahren zur Herstellung eines Xanthohumol-haltigen Getränks, bei dem einem erfindungsgemäßen Xanthohumol-haltigen Grundstoff ein Pflanzenextrakt und Wasser, ein Getränk und/oder ein Getränkekonzentrat zugesetzt wird. Der Grundstoff wird mit der Flüssigkeit gemischt und gegebenenfalls homogenisiert, so dass eine isotrope Lösung erhalten wird.

Die erfindungsgemäße Emulsion zur Herstellung eines Xanthohumol-haltigen Grundstoffs enthält mindestens 10 ppm Xanthohumol und einen Emulgator, wobei die Emulsion eine Öl-in-Wasser Emulsion ist. In bevorzugten Ausführungsformen enthält die Emulsion mindestens 50, 200, 500 oder 1000 ppm Xanthohumol, insbesondere 0,05 bis 2 oder 0,1 bis 1 Gew.-% Xanthohumol.

Die Erfindung betrifft auch die Verwendung eines Xanthohumol-haltigen Grundstoffs zur Herstellung eines Xanthohumol-haltigen Getränkes.

Die erfindungsgemäßen Xanthohumol-haltigen Getränke und Grundstoffe sind über längere Zeiträume stabil. Dies bedeutet, dass sie bei 4°C, vorzugsweise jedoch bei Raumtemperatur für mindestens 4 Wochen, vorzugsweise mindestens 3 oder 6 Monate gelagert werden können, ohne das wesentliche Mengen von Xanthohumol ausfallen.

Vorzugsweise weisen die Xanthohumol-haltigen Getränke pH-Werte <7, bevorzugt <6, insbesondere <5 auf.

### Ausführungsbeispiele:

### A: Herstellung einer Xanthohumol-Formulierung

Beispielhaft wird nachfolgend die Herstellung einer Xanthohumol-Formulierung mit Tween 60 als Lösungsvermittler beschrieben. Der Lösungsvermittler wird in einem Lösungsmittel, vorteilhafterweise Ethanol, vorgelöst und das Xanthohumol bzw. ein das Xanthohumol enthaltender Extrakt zu dieser Lösung unter Rühren zugesetzt. Alternativ ist es möglich, das Xanthohumol in Ethanol gelöst vorzulegen und das Tween 60 oder eine Lösung dessen -vorzugsweise in Ethanol- zuzugeben. Um eine schnelle Präparation zu gewährleisten, wird die ethanolische Lösung vor Zusatz des Xanthohumols und danach bis zum Erhalt einer isotropen Lösung erwärmt. Abschließend destilliert man das Ethanol im Vakuum ab und kann den Rückstand als nach Abkühlen wachsartig anfallende Masse weiterverarbeiten oder aber daraus eine wässerige Stammlösung herstellen.

Alternativ ist es auch möglich, einen aufschmelzbaren Lösungsvermittler, wie Tween 60 (6 Massenteile) zu erwärmen und das Xanthohumol (1 Massenteil) bzw. einen das Xanthohumol enthaltenden Extrakt unter Rühren im Wasserbad bei einer Wasserbadtemperatur von 95°C ohne Verwendung von Lösungsmittel zu lösen. Es resultiert im konkret beschriebenen Beispiel eine isotrope viskose Xanthohumol-Tween 60-Formulierung, mit der wie oben beschrieben weiter verfahren werden kann. Es ist möglich, auf die beschriebenen Weisen Xanthohumol-haltige Formulierungen herzustellen, die bis zu 50 Gew.-% Xanthohumol enthalten können, vorzugsweise zwischen 10 bis 40 Gew.-%.

### B: Herstellung einer Xanthohumol-Emulsion:

1080 mg eines 84%igen Xanthohumolpräparates werden in 9 g Triglycerid in der Wärme unter Zusatz eines Tropfens Ethanol gelöst, es resultiert eine Ölphase, die in 80 g einer *Gummi arabicum* enthaltenden Wasserphase mit Hilfe eines Rotor-Stator-Systems voremulgiert und anschließend mehrmals an einem Hochdruckhomogenisator feiner dispergiert wird. Die resultierende Emulsion zeigt keine Koaleszenz. Auch hieraus hergestellte wässerige Verdünnungen mit bis zu 50 ppm Xanthohumol zeigen sich stabil gegenüber Ringbildung und Sedimentation.

### C: Herstellung eines Xanthohumol-haltigen Getränkes aus einer Formulierung

Mit Hilfe einer Tween 20- und Xanthohumol-haltigen Formulierung gemäß Ausführungsbeispiel A können mit Xanthohumol angereicherte Getränke hergestellt werden. Zum einen kann das erwärmte und dadurch verflüssigte Xanthohumol-haltige Tween 60-Wachs mit Wasser zu einer Stammlösung vorverdünnt werden, z.B. zu einer Konzentration von 6 g/l, die dann weiter in einen Getränkegrundstoff oder ein Fertiggetränk eingearbeitet wird.

Alternativ wird das viskose erwärmte wachsartige Produkt unverdünnt in einen Getränkegrundstoff oder ein Fertiggetränk eingerührt. In dem Grundstoff ist ein Pflanzenextrakt enthalten, nämlich Rosmarinextrakt in einer Menge von 0,1% berechnet auf das Fertiggetränk. Man erhält auf diese Weise einen Xanthohumol-haltigen Getränkegrundstoff, der vor Verzehr oder Inverkehrbringen mit Wasser und gegebenenfalls weiteren Inhaltsstoffen, wie Zitronensäure oder Zucker, auf Fertiggetränkstärke ausgemischt wird. Auf diese Weise lassen sich variabel und je nach gewünschter Menge ohne weiteres Xanthohumol-Gehalte von bis zu 100 ppm oder mehr im Fertiggetränk einstellen.

Analytische Untersuchungen zeigten, dass ein eingestellter Xanthohumolgehalt von 30 ppm tatsächlich im Getränk enthalten ist. Dies bedeutet, dass die Herstellung der Xanthohumol-Formulierungen sehr schonend verläuft. Eine Isomerisierung zu Isoxanthohumol- ist demnach nicht oder nicht in wesentlichem Umfang zu beobachten. Auch nach Pasteurisation des Fertiggetränkes bei 80°C für 10 Minuten zeigt sich somit die Xanthohumol-Formulierung im Getränk stabil, es kommt nicht oder nur in unwesentlichem Umfang zur Entmischung oder der sonst für unformuliertes Xanthohumol beobachteten Ausflockungen.

### D: Herstellung eines Xanthohumol-haltigen Getränke-Grundstoffs aus der Xanthohumol-Emulsion

Mit Hilfe der unter Ausführungsbeispiel B beschriebenen Methode hergestellten Emulsion wurde ein Getränkegrundstoff hergestellt. Dies ist durch einfaches Einrühren der Xanthohumol-Emulsion in den Getränkegrundstoff möglich, ein zusätzlicher Homogenisierungsschritt ist hierbei nicht notwendig. Die Emulsion wird je nach gewählter Xanthohumol-Dosierung im Fertiggetränk in der adäquaten Menge zugesetzt. Im konkreten Beispiel wurden 100 g des Grundstoffes, der eine Ausgiebigkeit von 100:1000 aufweist, eine Menge von 2,1 g der in Ausführungsbeispiel B beschriebenen Emulsion zugesetzt. In diesem Grundstoff ist als Pflanzenextrakt Rosmarin in einer Menge von 0,1%, berechnet auf das Fertiggetränk, enthalten. Mischt man diesen Grundstoff auf Fertiggetränkstärke aus, so erhält man ein nicht bitter schmeckendes Getränk mit einem Xanthohumol-Gehalt von knapp 21 ppm.

Zusammenfassend erhält man auf diese Weise einen Grundstoff eines Xanthohumol-haltigen Getränkes, der vor Verzehr oder Inverkehrbringen mit Wasser und gegebenenfalls weiteren Inhaltsstoffen, wie Zitronensäure oder Zucker, auf Fertiggetränkstärke ausgemischt wird. Auf diese Weise lassen sich variabel und je nach gewünschter Menge ohne weiteres Xanthohumol-Gehalte von bis zu 100 ppm oder mehr im Fertiggetränk einstellen.

### E: Herstellung eines Bier-Mischgetränkes

Das Xanthohumol-haltige Getränkekonzentrat gemäß Ausführungsbeispiel D wird statt mit Wasser anteilig mit anderen Getränken versetzt. Hierbei kann der Wasserteil der jeweiligen Rezeptur zum Teil oder aber auch komplett durch beispielsweise Bier, alkoholreduziertes oder alkoholfreies Bier ersetzt werden. Man erhält somit Xanthohumol-haltige Biermischgetränke entweder mit oder ohne Alkohol.

## Patentansprüche

1. Xanthohumol-haltiges Getränk, enthaltend mindestens 2 ppm gelöstes Xanthohumol und mindestens einen Emulgator.

2. Xanthohumol-haltiges Getränk nach Anspruch 1, **dadurch gekennzeichnet**, das der Emulgator ausgewählt ist aus der Gruppe bestehend aus Polysorbaten, insbesondere Polyoxyethylen-Sorbitanfettsäurester (Tween), Gummen, wie beispielsweise *Gummi arabicum,* Pektinen, Stärken und modifizierten Stärken wie beispielsweise Purity Gum und/oder Proteinen wie beispielsweise Caseinaten aus Milch.

3. Xanthohumol-haltiges Getränk nach Anspruch 1 oder 2, **dadurch gekennzeichnet, dass** es ein Öl enthält.

4. Xanthohumol-haltiges Getränk nach Anspruch 3, **dadurch gekennzeichnet, dass** das Öl aus Triglyceriden, Digylceriden und/oder Monoglyceriden besteht.

5. Xanthohumol-haltiges Getränk nach mindestens einem der Ansprüche 1 bis 4, **dadurch gekennzeichnet, dass** mindestens ein Pflanzenextrakt und/oder ein Lösungsmittel enthalten ist.

6. Xanthohumol-haltiges Getränk nach Anspruch 5, **dadurch gekennzeichnet, dass** der mindestens eine Pflanzenextrakt ausgewählt ist aus der Gruppe bestehend aus Rosmarin, Salbei, Süßholz, Weißdorn, Vanille, Lindenblüte, Sonnenhutkraut, Ginseng, Gingko, Taigawurzel, Grüntee oder Kombinationen davon.

7. Xanthohumol-haltiges Getränk nach mindestens einem der Ansprüche 1 bis 6 in Kombination mit einem anderen Getränk.

8. Xanthohumol-haltiges Getränk nach Anspruch 7, wobei das andere Getränk ausgewählt ist aus der Gruppe Bier, alkoholfreies oder alkoholreduziertes Bier, Softdrinks, Fruchtsaft oder Milch.

9. Xanthohumol-haltiger Grundstoff, enthaltend mindestens 10 ppm gelöstes Xanthohumol und einen Emulgator für die Herstellung eines Xanthohumol-haltigen Getränkes gemäß einem der Ansprüche 1 bis 8.

10. Xanthohumol-haltiger Grundstoff nach Anspruch 9, **dadurch gekennzeichnet, dass** zusätzlich ein Öl, ein Lösungsmittel und/oder ein Pflanzenextrakt enthalten ist.

11. Xanthohumol-haltiger Grundstoff nach Anspruch 9 oder 10, **dadurch gekennzeichnet, dass** der Grundstoff als Emulsion vorliegt.

12. Verfahren zur Herstellung eines Xanthohumol-haltigen Grundstoffs nach einem der Ansprüche 9 bis 11, **dadurch gekennzeichnet, dass**
• Xanthohumol und/oder ein Xanthohumol-haltiger Extrakt mit einem aufschmelzbaren Emulgator oder in einem in Lösungsmittel gelösten Emulgator gemischt wird,
• gegebenenfalls unter Erwärmen und Rühren eine isotrope Lösung erzeugt wird
• im Falle der Zugabe eines in Lösungsmittel gelösten Emulgators das Lösungsmittel durch Destillation entfernt wird,
• ggf. weitere Bestandteile wie ein Pflanzenextrakt zugesetzt werden.

13. Verfahren zur Herstellung eines Xanthohumol-haltigen Getränks nach einem der Ansprüche 1 bis 8, **dadurch gekennzeichnet**, das einem Xanthohumol-haltigen Grundstoff nach einem der Ansprüche 9 bis 11 ein Pflanzenextrakt, Wasser, Säure, Zucker, ein Getränk und/oder ein Getränkekonzentrat zugesetzt wird.

14. Verwendung eines Xanthohumol-haltigen Grundstoffs nach einem der Ansprüche 9 bis 11 zur Herstellung eines Xanthohumol-haltigen Getränkes gemäß einem der Ansprüche 1 bis 8.

15. Emulsion zur Herstellung eines Xanthohumol-haltigen Grundstoffs, enthaltend mindestens 10 ppm gelöstes Xanthohumol und einen Emulgator, **dadurch gekennzeichnet, dass** die Emulsion eine Öl-in-Wasser Emulsion ist.

16. Emulsion nach Anspruch 15, **dadurch gekennzeichnet, dass** Triglyceride enthalten sind.

## Claims

1. A xanthohumol-containing beverage containing at least 2 ppm of dissolved xanthohumol and at least one emulsifier.

2. The xanthohumol-containing beverage according to claim 1, **characterized in that** said emulsifier is selected from the group consisting of polysorbates, especially polyoxyethylene sorbitan fatty acid esters (Tween), gums, such as gum arabic, pectins, starches and modified starches, such as Purity Gum, and/or proteins, such as caseinates from milk.

3. The xanthohumol-containing beverage according to claim 1 or 2, **characterized by** containing an oil.

4. The xanthohumol-containing beverage according to claim 3, **characterized in that** said oil consists of triglycerides, diglycerides and/or monoglycerides.

5. The xanthohumol-containing beverage according to at least one of claims 1. to 4, **characterized by** containing at least one plant extract and/or solvent.

6. The xanthohumol-containing beverage according to claim 5, **characterized in that** said at least one plant extract is selected from the group consisting of rosemary, sage, liquorice, hawthorn, vanilla, lime blossom, coneflower herb, ginseng, gingko, Siberian ginseng (taiga root), green tea or combinations thereof.

7. The xanthohumol-containing beverage according to at least one of claims 1 to 6 in combination with another beverage.

8. The xanthohumol-containing beverage according to claim 7, wherein said other beverage is selected from the group consisting of beer, non-alcoholic or alcohol-reduced beer, soft drinks, fruit juice or milk.

9. A xanthohumol-containing base containing at least 10 ppm of dissolved xanthohumol and an emulsifier for the preparation of a xanthohumol-containing beverage according to any of claims 1 to 8.

10. The xanthohumol-containing base according to claim 9, **characterized by** additionally containing an oil, a solvent and/or a plant extract.

11. The xanthohumol-containing base according to claim 9 or 10, **characterized in that** said base is in the form of an emulsion.

12. A process for the preparation of a xanthohumol-containing base according to any of claims 9 to 11, **characterized in that**:
• xanthohumol and/or a xanthohumol-containing extract is mixed with a meltable emulsifier or an emulsifier dissolved in a solvent;
• an isotropic solution is produced, optionally with heating and stirring;
• in the case of having added an emulsifier dissolved in a solvent, said solvent is removed by distillation;
• optionally further ingredients, such as a plant extract, are added.

13. A process for the preparation of a xanthohumol-containing beverage according to any of claims 1 to 8, **characterized in that** a plant extract, water, acid, sugar, a beverage and/or a beverage concentrate are added to a xanthohumol-containing base according to any of claims 9 to 11.

14. Use of a xanthohumol-containing base according to any of claims 9 to 11 for the preparation of a xanthohumol-containing beverage according to any of claims 1 to 8.

15. An emulsion for the preparation of a xanthohumol-containing base, containing at least 10 ppm of dissolved xanthohumol and an emulsifier, **characterized in that** said emulsion is an oil-in-water emulsion.

16. The emulsion according to claim 15, **characterized by** containing triglycerides.

## Revendications

1. Boisson au xanthohumol, contenant au moins 2 ppm de xanthohumol dissous et au moins un émulsifiant.

2. Boisson au xanthohumol selon la revendication 1, **caractérisée en ce que** l'émulsifiant est sélectionné dans le groupe comprenant des polysorbats, en particulier des esters d'acides gras de sorbitane-polyoxyéthylène (Tween), des gommes, comme par exemple la gomme arabique, des pectines, des amidons et des amidons modifiés comme par exemple du Purity Gum et/ou des protéines comme par exemple des caséinates de lait.

3. Boisson au xanthohumol selon la revendication 1 ou 2, **caractérisée en ce qu'**elle contient une huile.

4. Boisson au xanthohumol selon la revendication 3, **caractérisée en ce que** l'huile consiste en des triglycérides, des diglycérides et/ou des monoglycérides.

5. Boisson au xanthohumol selon au moins l'une des revendications 1 à 4, **caractérisée en ce qu'**elle contient au moins un extrait végétal ou un solvant.

6. Boisson au xanthohumol selon la revendication 5, **caractérisée en ce que** l'au moins un extrait végétal est sélectionné dans le groupe comprenant le romarin, la sauge, l'aubépine, la vanille, le tilleul, le rudbeckia, le ginseng, le ginkgo, des racines de taiga, du thé vert ou des combinaisons de ceux-ci.

7. Boisson au xanthohumol selon au moins l'une des revendications 1 à 6 en combinaison avec une autre boisson.

8. Boisson au xanthohumol selon la revendication 7, **caractérisée en ce que** l'autre boisson est sélectionnée dans le groupe comprenant la bière, la bière sans alcool ou faiblement alcoolisée, les boissons non alcoolisées, les jus de fruit ou le lait.

9. Substance de base au xanthohumol, contenant au moins 10 ppm de xanthohumol dissous et un émulsifiant pour la fabrication d'une boisson au xanthohumol selon l'une des revendications 1 à 8.

10. Substance de base au xanthohumol selon la revendication 1, **caractérisée en ce qu'**elle contient en plus une huile, un solvant et/ou un extrait végétal.

11. Substance de base au xanthohumol selon la revendication 9 ou 10, **caractérisée en ce que** la substance de base se présente sous la forme d'une émulsion.

12. Procédé de fabrication d'une substance de base au xanthohumol selon l'une des revendications 9 à 11, **caractérisé en ce que**
- du xanthohumol et/ou un extrait contenant du xanthohumol est mélangé à un émulsifiant fusible ou dans un émulsifiant dissous dans un solvant,
- une solution isotrope est générée le cas échéant avec chauffage et agitation,
- dans le cas où l'on ajoute un émulsifiant dissous dans un solvant, le solvant est éliminé par distillation,
- d'autres composants tels qu'un extrait végétal sont éventuellement ajoutés.

13. Procédé de fabrication d'une boisson au xanthohumol selon l'une des revendications 1 à 8, **caractérisé en ce qu'**un extrait végétal, de l'eau, un acidifiant, du sucre, un boisson et/ou un concentré de boisson est ajouté à une substance de base au xanthohumol.

14. Utilisation d'une substance de base au xanthohumol selon l'une des revendications 9 à 11 pour la fabrication d'une boisson au xanthohumol selon l'une des revendications 1 à 8.

15. Emulsion destinée à la fabrication d'une substance de base au xanthohumol contenant au moins 10 ppm de xanthohumol dissous et un émulsifiant, **caractérisée en ce que** l'émulsion est une émulsion d'huile dans de l'eau.

16. Emulsion selon la revendication 15, **caractérisé en ce qu'**elle contient des triglycérides.
